(19) Europäisches Patentamt
European Patent Office
Office européen des brevets

(11) **EP 2 017 935 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
*H02J 1/08* (2006.01)    *H02J 7/14* (2006.01)
*B60R 16/03* (2006.01)

(21) Anmeldenummer: **07011049.9**

(22) Anmeldetag: **05.06.2007**

(54) **Elektronischer Trennschalter**

Electronic circuit breaker

Sectionneur électronique

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**21.01.2009 Patentblatt 2009/04**

(73) Patentinhaber: **Eberspächer Controls Landau GmbH & Co. KG**
**76829 Landau (DE)**

(72) Erfinder:
• **Uhl, Günter**
**74921 Heimstadt-Bargen (DE)**

• **Wandres, Steffen**
**76870 Kandel (DE)**

(74) Vertreter: **Grünecker Patent- und Rechtsanwälte PartG mbB**
**Leopoldstraße 4**
**80802 München (DE)**

(56) Entgegenhaltungen:
**EP-A- 0 810 710    DE-A1- 19 628 222**
**DE-A1- 19 855 245    DE-A1- 19 948 656**

**Beschreibung**

Die vorliegende Erfindung bezieht sich auf einen elektronischen Schalter zur Trennung unterschiedlicher Bereiche eines Kfz-Bordnetzes.

Im Kfz-Bordnetz werden immer mehr elektronische Systeme eingebaut, die sehr empfindlich auf jede Art von Spannungseinbrüchen im Bordnetz reagieren; z.B. die Infotainment- und Navigationsysteme. Bereits ein kurzer Spannungseinbruch von wenigen Millisekunden kann ein Reset des Systems auslösen. Das anschließende Wiederhochfahren des Systems dauert oft viele Sekunden oder sogar mehrere Minuten. Während dieser Zeit ist das System nicht verfügbar. Bei sicherheitsrelevanten System ist dies nicht zulässig, bei Systemen der Unterhaltungselektronik ist dies zumindest lästig für Fahrer und Beifahrer. Ein möglicher Auslöser für einen solchen Spannungseinbruch ist der Startvorgang des Verbrennungsmotors, wenn der Starter aktiviert wird und kurzzeitig Ströme von mehreren hundert Ampere fließen. Dieses Problem gewinnt zukünftig noch mehr an Bedeutung, wenn durch eine Start-Stopp-Funktion der Verbrennungsmotor nicht nur einmal bei Fahrtantritt sondern auch mehrfach während der Fahrt z.B. bei einem Ampelstopp wieder gestartet wird. Auch ein Lenksystem mit einer elektrisch-hydraulischen Servounterstützung (EPS) wird derartige kurze Spannungseinbrüche hervorrufen.

Eine Möglichkeit, um die Auswirkung derartiger Spannungseinbrüche auf einen Bereich des Bordnetzes zu verhindern, besteht darin, das Bordnetz in mindestens zwei Bereiche aufzugliedern und in jedem Bereich einen elektrischen Energiespeicher, z.B. aufladbare Batterien oder Batterien und ein Kondensator hoher Kapazität (Bezeichnung EDLC, UltraCap oder SuperCap), anzuordnen. Kommt es nun zu Betriebszuständen, die einen Spannungseinbruch hervorrufen können, so werden die Bordnetzbereiche durch einen geeigneten Trennschalter voneinander getrennt. Damit sind die Bordnetzbereiche spannungsmäßig voneinander entkoppelt. Ein Spannungseinbruch in einem Bereich kann sich nicht auf die Systeme in dem anderen Bereich auswirken. Ebenso ist ein Stromfluss (Ausgleichsströme) zwischen den verschiedenen Energiespeichern nicht möglich

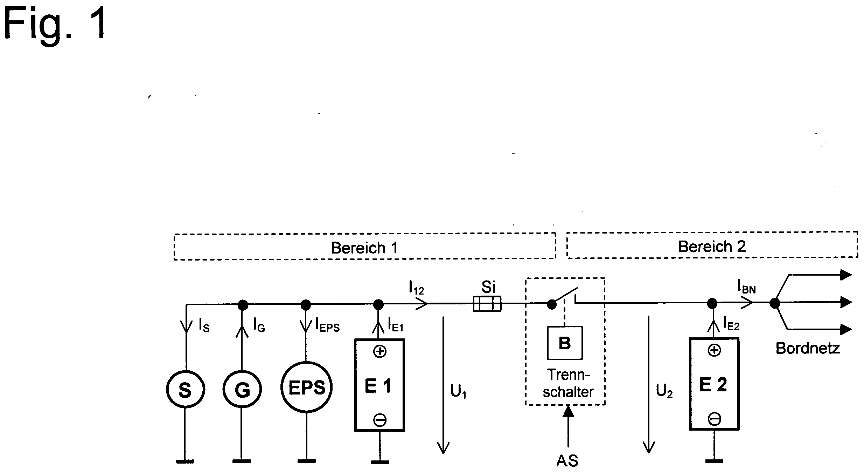

Hierzu ist in Figur 1 eine typische Anordnung aus einem Kfz-Bordnetz dargestellt, wie man sie nach heutigem Stand der Technik in einem Fahrzeug realisiert. Als Trennschalter kommt ein Relais B, also ein elektromechanisch betätigter Schalter, zum Einsatz. Die Schaltkontakte des Relais sind hinsichtlich Stromtragfähigkeit entsprechend ausgelegt. Über ein Ansteuersignal AS wird der Trennschalter aktiviert bzw. deaktiviert.

Bei laufendem Verbrennungsmotor wird die im Fahrzeug benötigte elektrische Leistung durch den Generator G erzeugt. Der Trennschalter ist geschlossen, d.h. die Bereiche 1 und 2 sind elektrisch miteinander verbunden. Der vom Generator erzeugte Strom $I_G$ lädt die beiden Energiespeicher E1 und E2 und versorgt das Bordnetz. Es gilt:

$$I_S = 0$$

$$I_G > 0$$

$$I_{E1} < 0$$

$$I_{E2} < 0$$

$$I_{BN} > 0$$

$$I_{12} = I_{BN} - I_{E2}$$

Bei stehendem Verbrennungsmotor wird vor Einleitung des Startvorgangs der Trennschalter geöffnet, d.h. die Bereiche 1 und 2 werden elektrisch voneinander getrennt.

Der Energiespeicher E1 liefert den zum Antreiben des Starters S benötigten Strom $I_S$. Es gilt:

$$I_S > 0$$

$$I_G = 0$$

$$I_{E1} > 0$$

$$I_{E2} = I_{BN}$$

$$I_{12} = 0$$

Nachteilig am Einsatz eines Relais als Trennschalter ist, dass um auf sehr schnelle und/oder kurzzeitige Spannungseinbrüchen im Millisekundenbereich und kürzer reagieren zu können, das Relais bereits vor dem eigentlichen Ereignis "Spannungseinbruch" betätigt werden muss, da ein elektromechanisch betätigter Schalter einige Millisekunden oder sogar mehrere 10-Millisekunden zum Schalten benötigt. Dazu ist es also erforderlich, wenn z.B. der Fahrer durch Betätigen des Zündschlosses den Motor starten will, zunächst den Trennschalter und dann erst den Starter des Verbrennungsmotors zu aktivieren. Das bedeutet, dass das Auftreten eines Ereignisses, das einen Spannungseinbruch hervorruft, im Vorhinein bekannt sein muss und ein entsprechender Informationsaustausch zwischen all den Systemen, die einen Spannungseinbruch hervorrufen können, und dem Trennschalter realisiert werden muss. Spontan auftretende Spannungseinbrüche können auf diese Weise nicht verhindert werden.

Nachteilig am Einsatz eines Relais ist weiterhin die begrenzte Lebensdauer der elektromechanischen Kontakte, insbesondere wenn sie Ströme von 100 A und mehr schalten müssen. Es muss also über der Gesamtbetriebszeit des Fahrzeuges mit einem Ausfall des Trennschalters und infolge einem Austausch gerechnet werden.

Außerdem werden durch die "harten" Schaltvorgänge des Relais unter Umständen hohe Ströme oder Spannungsunterschiede zwischen den beiden Bordnetzbereichen 1 und 2 unterbrochen bzw. kurzgeschlossen. Die sich durch die Leitungsinduktivitäten ergebenden hohen Gegeninduktionsspannungen führen zu Störspannungs- und Stromspitzen, die gravierende EMV-Probleme (EMV = Elektromagnetische Verträglichkeit) nach sich ziehen können.

Aus der Druckschrift DE 196 28 222 A, die eine Vorrichtung zur Spannungsversorgung in einem Kraftfahrzeug betrifft, ist es bekannt, ein Kfz-Bordnetz mit Hilfe eines Trennschalters in zwei Bereiche aufzuteilen, die jeweils mit einer eigenen Batterie versehen sind, und den Trennschalter während eines Startvorgangs zu öffnen, um zu verhindern, dass vom Startkreis ein Spannungseinbruch auf das übrige Bordnetz weitergegeben wird. Aus dieser Druckschrift ist insbesondere ein Halbleiterschalter bestehend aus zwei invers in Reihe geschalteten Feldeffekttransistoren bekannt, der durch einen Komparator angesteuert wird, der wiederum die Spannung zwischen dem Eingangs- und dem Ausgangsanschluss des Trennschalters überwacht. Auf diese Weise wird eine "aktive Diode" realisiert, die sich durch einen minimalen stromabhängigen Spannungsabfall im Vergleich zu einer herkömmlichen Diode auszeichnet.

Aus der Druckschrift DE 198 55 245 A, die eine redundante Spannungsversorgung für elektrische Verbraucher in einem Kfz-Bordnetz betrifft, sind Ladetrennmodule bekannt, die einen Halbleiterschalter sowie eine herkömmliche Diode enthalten. Außerdem können die Ladetrennmodule mit einer integrierten Ansteuer- und Auswertelogik versehen sein, die Strom und Spannung überwacht und den Halbleiterschalter ansteuert, um den Stromkreis bei zu hoher Strombelastung (Kurzschluss) zu unterbrechen.

Ziel der vorliegenden Erfindung ist es, einen verbesserten Trennschalter für den Einsatz in einem Kfz-Bordnetz anzugeben.

Dies wird durch die Merkmale des unabhängigen Anspruchs 1 erreicht. Bevorzugte Ausführungsformen sind Gegenstand der abhängigen Ansprüche.

Gemäß einem ersten Aspekt der vorliegenden Erfindung wird ein Trennschalter zur Trennung eines Kfz-Bordnetzes in zwei Bereiche zur Verfügung gestellt. Der Trennschalter umfasst einem ersten Eingangsanschluss und einem Ausgangsanschluss, einen ersten Halbleiterschalter, der den ersten Eingangsanschluss mit dem Ausgangsanschluss verbindet, eine Überwachungsschaltung, die zumindest die Spannung am Eingangs- und/oder Ausgangsanschluss des ersten Halbleiterschalters oder den Strom durch den ersten Halbleiterschalter überwacht, und eine Steuerschaltung, die den ersten Halbleiterschalter abschaltet, wenn die Überwachungsschaltung feststellt, dass die überwachte Spannung oder der überwachte Strom unter einen vorgegebenen Schwellwert absinkt, und ist gekennzeichnet durch einen zweiten Eingangsanschluss und einen zweiten Halbleiterschalter, der den zweiten Eingangsanschluss mit dem Ausgangsanschluss verbindet, wobei die Steuerschaltung so eingerichtet ist, dass sie den zweiten Halbleiterschalter einschaltet, wenn die Überwachungsschaltung feststellt, dass die überwachte Spannung oder der überwachte Strom unter den vorgegebenen Schwellwert absinkt.

Vorzugsweise überwacht die Überwachungsschaltung zumindest die Spannung am Eingangsanschluss und die Steuerschaltung schaltet den Halbleiterschalter ein, wenn die Überwachungsschaltung feststellt, dass die überwachte Spannung einen vorgegebenen Schwellwert überschreitet.

Damit kann der Trennschalter autonom auf einen Spannungsabfall in dem ersten Bereich des Kfz-Bordnetzes reagieren und einen Spannungseinbruch in dem zweiten Bereich verhindern. Sobald der Spannungsabfall in dem ersten Bereich vorüber ist, kann der Schalter wieder geschlossen werden und der zweite Bereich mit Strom aus dem ersten Bereich versorgt werden.

Vorzugsweise liegt der Schwellwert im Bereich zwischen der Ladespannung und der Spannung im Entladungszustand eines Energiespeichers im zweiten Bereich des Bordnetzes. Für herkömmliche Personenwagen also im Bereich zwischen 12,0 V und 14,4 V, für Nutzfahrzeuge im Bereich zwischen 24,0 V und 28,8 V und für zukünftige 42V-Bordnetze zwischen 36,0 V und 43,2 V.

Vorzugsweise liegt der Schwellwert in der Mitte oder beim unteren Drittel des Spannungsbereichs zwischen Lade- und Entladespannung, also in etwa bei 13,2 V oder 12,8 V für 12V-Bordnetze, in etwa bei 26,4 V oder 25,6 V für 24V-Bordnetze und in etwa bei 39,6 V oder 38,4 V bei 42V-Bordnetzen.

Vorzugsweise belässt die Steuerschaltung den Halbleiterschalter im eingeschalteten Zustand, solange ein Strom vom Eingangsanschluss zum Ausgangsanschluss des Trennschalters fließt, und schaltet den Halbleiterschalter ab, sobald sich die Stromrichtung umkehrt. Auf diese Weise kann ein Spannungseinbruch in dem mit dem Ausgangsanschluss verbundenen zweiten Bereich verhindert werden, der durch eine Stromspitze im ersten Bereich verursacht werden könnte.

Vorzugsweise wird die Steuerschaltung den Halbleiterschalter bei einer Umkehr der Stromrichtung im Augenblick des Nulldurchgangs des Stroms durch den Trennschalter abschaltet. Durch das "sanfte" Ausschalten können EMV-Probleme vermieden werden.

Vorzugsweise belässt die Steuerschaltung den Halbleiterschalter im ausgeschalteten Zustand, solange die Spannung am Eingangsanschluss des Trennschalters kleiner ist, als die Spannung am Ausgangsanschluss, und schaltet den Halbleiterschalter ein, sobald die Spannung am Eingangsanschluss die Spannung am Ausgangsanschluss überschreitet. Auf diese Weise kann ein Abfallen der Spannung im zweiten Bereich, wie sie durch einen großen Leistungsverbrauch im ersten Bereich verursacht würde, vermieden werden. Sobald der Generator im ersten Bereich den Leistungsverbrauch wieder decken kann, wird der Schalter geschlossen, so dass auch die Verbraucher des zweiten Bereichs über den Generator mit Strom versorgt werden.

Vorzugsweise schaltet die Steuerschaltung den Halbleiterschalter in dem Augenblick ein, in dem die Spannung am Eingangsanschluss denselben Wert wie die Spannung am Ausgangsanschluss des Trennschalters aufweist. Durch ein derartiges "sanftes" Einschalten können EMV-Probleme vermieden werden.

Vorzugsweise umfasst der Halbleiterschalter einen invers betriebenen Feldeffekttransistor. Feldeffekttransistoren zeichnen sich durch einen geringen Spannungsabfall im durchgeschalteten Zustand und damit verbunden durch eine geringe Verlustleistung aus.

Vorzugsweise umfasst der Halbleiterschalter eine Mehrzahl parallel geschalteter Feldeffekttransistoren im Inversbetrieb. Vorzugsweise ist die Mehrzahl parallel geschalteter Feldeffekttransistoren auf einer gemeinsamen Wärmesenke montiert. Auf diese Weise kann sowohl die Stromtragfähigkeit des Trennschalters erhöht werden, als auch dessen Robustheit im Falle des Versagens einzelner Feldeffekttransistoren.

Vorzugsweise ist der Source-Anschluss des mindestens einen Feldeffekttransistors mit dem Eingangsanschluss und der Drain-Anschluss des mindestens einen Feldeffekttransistors mit dem Ausgangsanschluss verbunden. Durch diese "Inversschaltung" wird verhindert, dass im ausgeschalteten Zustand ein Strom durch die Body-Diode des Feldeffekttransistors vom zweiten Bereich des Kfz-Bordnetzes zum ersten Bereich fließt.

Vorzugsweise überwacht die Überwachungsschaltung außerdem die Temperatur des Halbleiterschalter und die Steuerschaltung schaltet den Halbleiterschalter ein, wenn die Überwachungsschaltung feststellt, dass die Temperatur eine vorgegebene Grenze überschreitet. Auf diese Weise kann ein sicherer Betrieb des Trennschalters gewährleistet werden, indem eine Überhitzung des Halbleiterschalters im ausgeschalteten Zustand verhindert wird.

Vorzugsweise entspricht der Schwellwert in etwa der Spannung eines Energiespeichers im zweiten Bereich des Kfz-Bordnetzes. Dadurch wird ein sanftes Umschalten erreicht, und zwar zu dem Zeitpunkt, an dem die Spannung des ersten Bereichs des Bordnetzes der Spannung des Energiespeichers im zweiten Bereich entspricht.

Weitere vorteilhafte Ausführungsformen der Erfindung sind Gegenstand der Unteransprüche.

Die Erfindung wird im folgenden unter Bezugnahme auf die beigefügten Abbildungen beschrieben, in denen:

Fig. 1 schematisch ein konventionelles Kfz-Bordnetz mit zwei Energiespeichern und einem herkömmlichen Trennschalter zeigt,

Fig. 2 schematisch ein erfindungsgemäßes Kfz-Bordnetz mit zwei Energiespeichern und einem elektronischen Trennschalter gemäß einer ersten Ausführungsform der vorliegenden Erfindung zeigt,

Fig. 3 ein Schaltungsdiagramm für eine Implementierung eines Hochstrom-Halbleiterschalters gemäß der vorliegenden Erfindung zeigt.

Fig. 4 schematisch ein erfindungsgemäßes Kfz-Bordnetz mit zwei Energiespeichern und einem elektronischen Trennschalter gemäß einer zweiten Ausführungsform der vorliegenden Erfindung mit Drain-Anschluß des weiteren Schalttransistor T2 am Bordnetz zeigt.

Fig. 5 schematisch ein erfindungsgemäßes Kfz-Bordnetz mit zwei Energiespeichern und einem elektronischen Trennschalter gemäß einer dritten Ausführungsform der vorliegenden Erfindung mit Source-Anschluß des weiteren Schalttransistor T2 am Bordnetz zeigt.

Fig. 6 ein Schaltungsdiagramm für eine alternative Implementierung eines Hochstrom-Halbleiterschalters gemäß der vorliegenden Erfindung bestehend aus zwei invers in Reihe geschalteten Schalttransistoren.

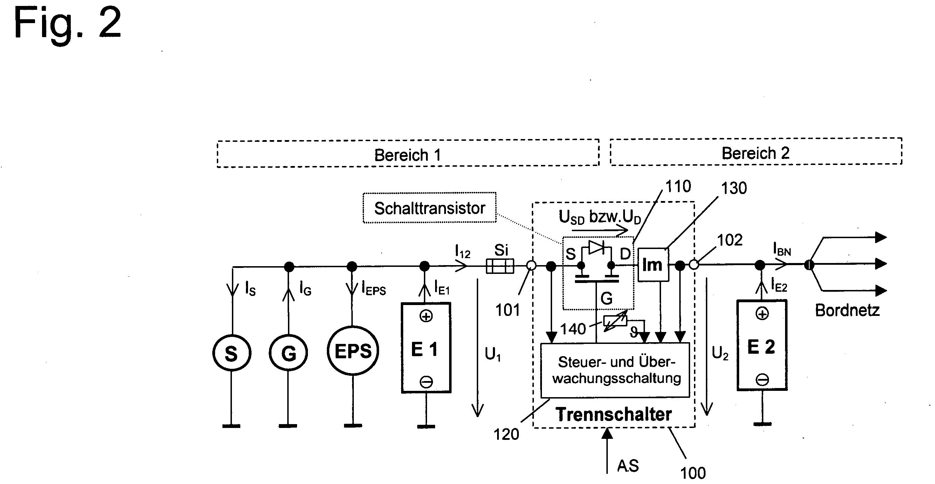

Figur 2 zeigt schematisch ein Kfz-Bordnetz mit zwei Energiespeichern und einem elektronischen Trennschalter 100 gemäß einer ersten Ausführungsform der vorliegenden Erfindung.

Die vorliegenden Erfindung sieht den Einsatz eines MOSFETs als Schalttransistor T vor, der invers betrieben wird. Der Schalttransistor T ist in den Zeichnungen ebenfalls mit der Nummer 110 bezeichnet. Sind die beiden Bereiche 1 und 2 des Bordnetzes miteinander verbunden, so kommt es zu einem Stromfluss $I_{12}$, der Generator G versorgt das Bordnetz (Strom $I_{BN}$) und lädt, wenn erforderlich, den Energiespeicher E2 auf (Strom $I_{E2} < 0$).

Um den Spannungsabfall über den Transistor T bzw. dessen Bodydiode gering zu halten, wird der Transistor T invers durchgeschaltet. Dies ist aufgrund des symmetrischen Aufbaues eines MOSFETs zulässig.

Kommt es nun zu einem Spannungseinbruch im Bereich 1, soll ein Stromfluss von Bereich 2 nach Bereich 1 (Strom $I_{12} < 0$) unterbunden werden. Hierzu wird in einer Steuer- und Überwachungsschaltung im Trennschalter die Spannung $U_1$ und/oder der Strom $I_{12}$ überwacht. Wird ein Absinken der Spannung $U_1$ unter einen Schwellwert erkannt und/oder ein Absinken des Stromes $I_{12}$ von einem Wert $I_{12} > 0$ auf 0 (mit einer dann folgenden Stromumkehr: $I_{12} < 0$), wird der Transistor T gesperrt.

Der Schwellwert wird so festgelegt, dass ein Umschalten möglichst sanft und insbesondere ohne EMV-Probleme erfolgen kann. Dazu wird der Schwellwert auf einen Spannungswert im Bereich zwischen der Ladespannung $U_{1L}$ des Energiespeichers E1 und der Spannung $U_{2E}$ im Entladungszustand des Energiespeichers E2 festgelegt. Für den Schwellwert $U_{1lim}$ gilt also:

$$U_{2E} < U_{1lim} < U_{1L}$$

Bei herkömmlichen Personenwagen liegt der Schwellwert also im Bereich zwischen 12,0 V und 14,4 V, für Nutzfahrzeuge im Bereich zwischen 24,0 V und 28,8 V und für zukünftige 42V-Bordnetze zwischen 36,0 V und 43,2 V - jeweils unter der Voraussetzung, dass die wiederaufladbare Batterien, also Akkumulatoren E1 und E2 in den beiden Bordnetzbereichen jeweils gleiche Ladespannung und gleiche Spannung im Entladungszustand aufweisen.

Dabei wird vorzugsweise ein Spannungswert als Schwellwert gewählt, der etwa in der Mitte oder beim unteren Drittel des Spannungsbereichs zwischen Lade- und Entladespannung, für $U_{1lim}$ gilt also:

-    $U_{1lim} = U_{2E} + (U_{1L} - U_{2E})/2$ Mitte des Bereiches $U_{2E}$ <--> $U_{1L}$ oder auch

-    $U_{1lim} = U_{2E} + (U_{1L} - U_{2E})/3$ unteres Drittel des Bereiches $U_{2E}$ <--> $U_{1L}$

In Abhängigkeit von der Bordnetzspannung liegt der Schwellwert also in etwa bei 13,2 V oder 12,8 V für 12V-Bordnetze, in etwa bei 26,4 V oder 25,6 V für 24V-Bordnetze und in etwa bei 39,6 V oder 38,4 V für 42V-Bordnetze.

Im gesperrten Zustand des Transistors T ist ein Stromfluss durch dessen Bodydiode nicht mehr möglich, da die Spannung U1 nicht mehr um die Durchlassspannung $U_D$ über der Spannung $U_2$ des Bereiches 2 liegt.

Steigt die Spannung $U_1$ wieder an, wird der Transistor T wieder (invers) durchgeschaltet, wenn für $U_1$ gilt:

$$U_2 < U_1$$

Vorzugsweise schaltet der Transistor T wieder durch, solange

$$U_1 < (U_2 + U_D)$$

d.h. $U_1$ noch um weniger als die Durchlaßspannung $U_D$ über $U_2$ liegt. Auf diese Weise wird ein Stromfluß durch die Bodydiode und damit eine unnötige Erwärmung des Transistors T zusammen mit der dadurch bedingten Gefahrenquelle vermieden.

Erfindungsgemäß kann somit ein Trennschalter 100 realisiert werden, der autonom, d.h. ohne externes Ansteuersignal die Bereiche 1 und 2 des Bordnetzes trennen kann, sobald ein drohender Spannungsabfall in Bereich 1 detektiert wird. Der erfindungsgemäße Trennschalter kann im Gegensatz zu dem herkömmlichen Trennschalter aus Fig. 1 auch spontane Spannungseinbrüche verhindern, d.h. Spannungseinbrüche, die nicht durch ein Ansteuersignal antizipiert werden können, wie dies beispielsweise beim Starten des Motors möglich wäre.

In einer alternativen Ausführungsform der Erfindung kann der Trennschalter 100 weiterhin so ausgestaltet sein, dass ihm ein externes Steuersignal AS zugeführt wird. Auf diese Weise kann die Trennung und Verbindung beider Bereiche des Kfz-Bordnetzes zusätzlich auch basierend auf einem externen Signal durchgeführt werden.

Grundsätzlich sind Halbleiterschalter in ihrem Überlastverhalten nicht so robust wie ein elektromechanischer Schalter. Gerade in Verbindung mit den sehr hohen Lastströmen von 100 A und mehr ist daher ein robustes Design erforderlich, das ein ausreichendes Überlastverhalten aufweist und im Störungsfall einen Notbetrieb ermöglicht, damit nicht jede Störung sofort zu einem Totalausfall (Fahrzeug-Liegenbleiber) führt.

Vorzugsweise wird daher der Schalttransistors T und dessen Wärmesenke zur Kühlung nicht auf den max. spezifizierten Strom $I_{12}$ ausgelegt, sondern auf einen deutlich höheren Wert, so dass die Stromtragfähigkeit und Ansprechzeit einer vorgeschalteten Sicherung Si übertroffen werden. Im Falle einer Störung wird daher die Sicherung Si ansprechen, bevor der Schalttransistor beschädigt wird. Als Wärmesenke ist der Schalttransistor T vorzugsweise auf einem Kühlkörper (nicht dargestellt) montiert. Der Kühlkörper kann als Stromschiene ausgebildet sein und somit gleichzeitig die Funktion der Kühlung und Stromleitung übernehmen.

Zusätzlich kann der Schalttransistors T mit einer permanenten thermischen Überwachung versehen sein, vor allem bei aktiver Trennung bzw. wenn der Schalttransistor nicht angesteuert ist. Dazu ist Temperatursensor 140 vorgesehen, der die Temperatur ϑ des Schalttransistors T erfasst.

Bei abgestelltem Fahrzeug (Zündung "AUS") sind die Bereiche 1 und 2 getrennt. Die Versorgung von Systemen, die auch bei Zündung AUS aktiv sind wie z.B.

Schließanlage, Alarmanlage, erfolgt aus dem Energiespeicher E2. Zu einem Stromfluss durch den nicht angesteuerten Transistor T bzw. dessen Bodydiode kann es kommen, wenn der Energiespeicher E2 ausfällt. In Abhängigkeit von der Höhe des Stromes kann es zu einer unzulässigen Erwärmung des Transistors T kommen.

Eine unzulässige Erwärmung des Schalttransistors kann durch die Überwachungsschaltung - über den Temperatursensor 140 - erkannt werden, die dann zur Vermeidung einer Überhitzung den Schalttransistor durchschaltet, unabhängig vom Wert der über den Transistor abfallenden Spannung oder dem Strom durch den Transistor. Dazu wird bei Überschreiten eines Temperaturschwellwertes durch die erfasste Temperatur $\vartheta$ der Schalttransistor eingeschaltet. Auf diese Weise wird die über den Transistor abfallenden Spannung von $U_D$ auf etwa Null abgesenkt und somit die Verlustleistung reduziert und eine weitere Erhitzung verhindert.

Ein weiterer Vorteil der vorliegenden Erfindung liegt in dem gegeninduktionsarmen Trennen und Verbinden der beiden Bordnetzbereiche 1 und 2 sobald der Stromfluss $I_{12}$ negativ bzw. positiv wird. Bei hinreichend schneller Reaktion geschieht dies bei relativ kleinen Strömen von wenigen Ampere, wodurch ein "weicher" Übergang mit minimalen EMV Störungen gewährleistet ist.

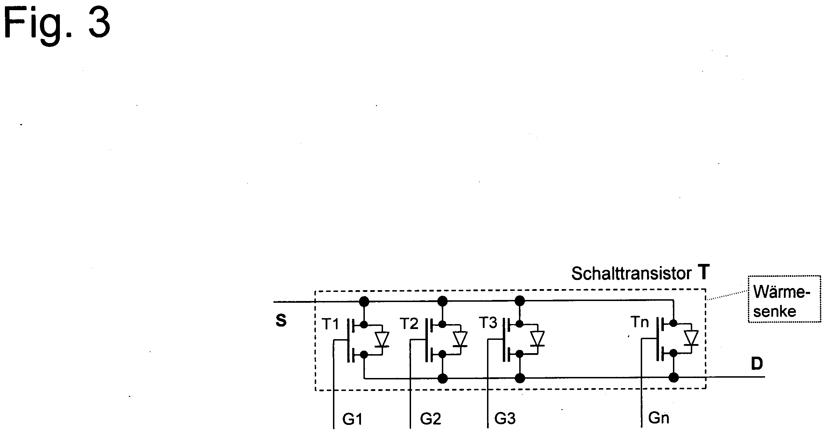

Figur 3 zeigt ein Schaltungsdiagramm eines Hochstrom-Halbleiterschalters gemäß einer weiteren Ausführungsform der vorliegenden Erfindung. Als zusätzliche Maßnahme zur Verbesserung der Zuverlässigkeit des Trennschalters 100 wird der Schalttransistor T nicht als ein Bauteil sondern als Parallelschaltung von n Transistoren T1 bis Tn realisiert. Transistoren mit einem $R_{DSon}$ von weniger als 1 m$\Omega$ sind kaum verfügbar. Die Parallelschaltung von mehreren nicht so niederohmigen Transistoren hat verschiedene Vorteile: Die Stromein- und - ausleitung zum bzw. vom Transistor (z.B. Verbindung zu einer Leiterplatte oder einer Stromschiene) erfolgt nicht über eine, sondern über mehrere Verbindungsstellen. Ähnliches gilt für die Wärmeauskopplung (Abführen der im Transistor erzeugten Verlustleistung) aus dem Transistor in einen Kühlkörper. In beiden Fällen reduziert sich die spezifische Belastung der einzelnen Verbindungsstellen. Ein Ausfall einzelner Transistoren, insbesondere ein Durchlegieren einzelner Transistoren, führt nicht zum Systemausfall, sondern lässt einen Notbetrieb mit eingeschränkten Funktionen (z.B. Trennung zwischen den Bereichen ist nicht möglich) zu.

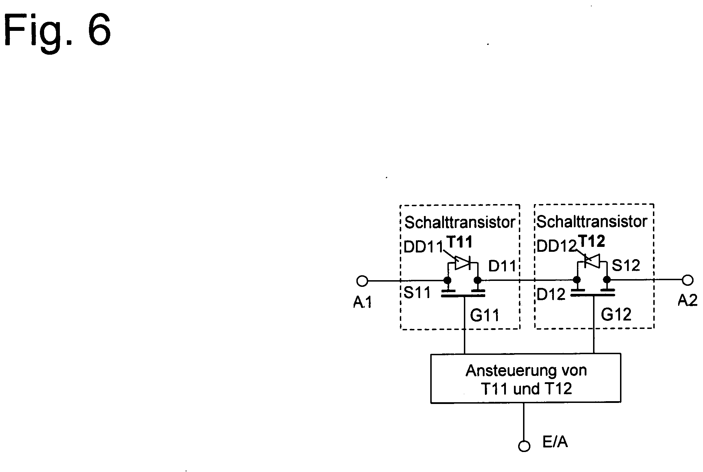

Anstelle eines einzelnen Transistors T (gemäß Fig. 2) oder einer Mehrzahl parallel geschalteter Transistoren T1 bis Tn (gemäß Fig. 3) kann die Trennfunktion auch durch zwei invers in Reihe geschaltete MOSFETs erreicht werden. Ein Beispiel für eine solche Schaltungsvariante ist in Fig. 6 wiedergegeben. Dabei wird der Transistor T der Fig. 2 durch die beiden Transistoren T11 und T12 ersetzt. Beide Transistoren T11 und T12 sind jeweils invers zueinander orientiert, d.h. beide Transistoren sind über Drain verbunden und jeweils über Source mit den jeweiligen Bordnetzbereichen 1 bzw. 2 verbunden.

Der Vorteil von zwei invers in Reihe geschalteter Transistoren nach Fig. 6, speziell von MOSFETs, ist, daß der Stromfluß in beide Richtungen - von Anschluß A1 nach A 2 und von Anschluß A2 nach A1 - vollständig gesteuert werden kann. Die Anordnung verhält sich wie ein Relais mit einem elektromechanischen Schaltkontakt. Für den Stromfluß durch die beiden Schalttransistoren T11 und T12 gilt:

- Stromfluß von Anschluß A1 nach A 2: T11 invers leitend, T12 normal leitend;

- Stromfluß von Anschluß A2 nach A1: T11 normal leitend, T12 invers leitend;

- kein Stromfluß zwischen A1 und A2: T11 und T12 gesperrt.

Im Gegensatz zu den Schaltungsvarianten nach Fig. 2 und Fig. 3 kann bei Verwendung von zwei invers in Reihe geschalteten MOSFETs kein Strom über die Bodydioden DD11, DD12 der Transistoren T11 und T12 fließen und eine Überhitzungsgefahr durch ungewollte Stromflüsse über die Bodydioden damit ausgeschlossen werden.

In der bisher beschriebenen Ausführung mit zwei Energiespeichern E1, E2 und einem Trennschalter 100 wird das Bordnetz bei abgestelltem Fahrzeug vorzugsweise aus dem Energiespeicher E2 versorgt. Um das Bordnetz nur bei kurzzeitigen Spannungseinbrüchen aus dem Energiespeicher E2 und bei abgestelltem Fahrzeug gezielt aus dem Energiespeicher E1 zu versorgen (z.B. um den Energiespeicher E2 aus Lebensdauergründen zu schonen), ist gemäß einer zweiten und dritten Ausführungsform der vorliegenden Erfindung ein weiterer Schalttransistor T2 vorgesehen, der den Energiespeicher E2 vom Bordnetz trennt.

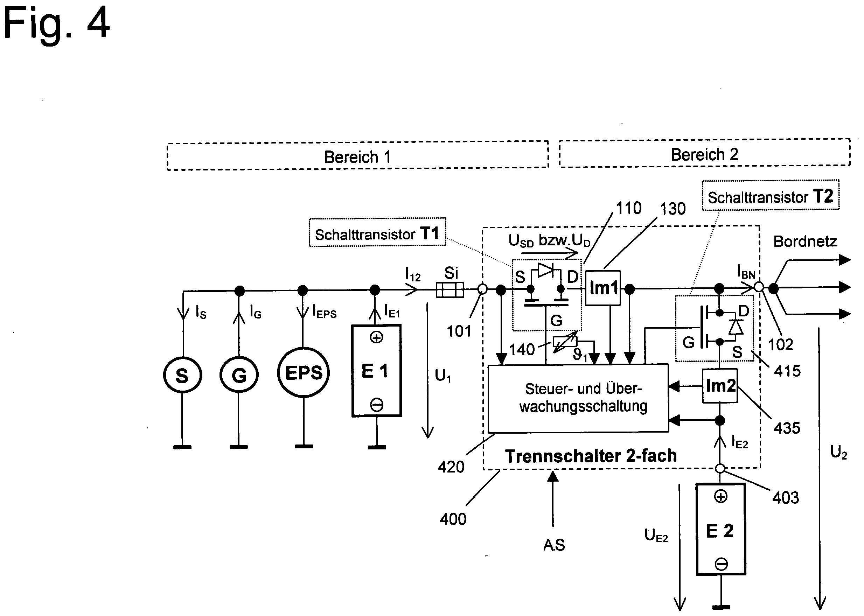

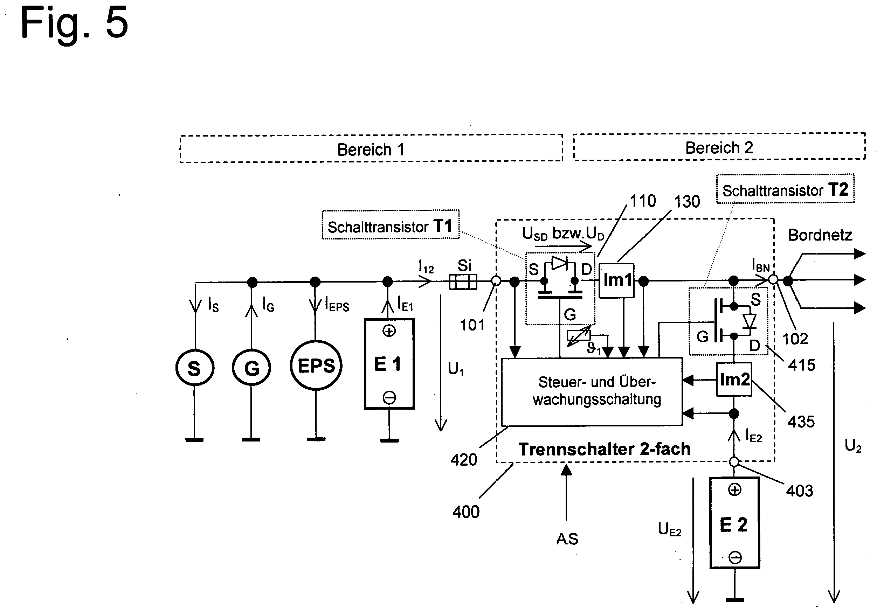

Fig. 4 und Fig. 5 zeigen schematisch ein Kfz-Bordnetz mit zwei Energiespeichern und einem elektronischen Trennschalter gemäß einer zweiten und dritten Ausführungsform der vorliegenden Erfindung.

Gemäß der zweiten Ausführungsform, die in Fig. 4 wiedergegeben ist, ist in dem elektronischen Trennschalter der Einsatz von zwei MOSFETs als Schalttransistoren T1 (110) und T2 (415) vorgesehen. Der Schalttransistor T1 wird nur invers betrieben; der Schalttransistor T2 wird normal und invers betrieben.

Für die zweite Ausführungsform nach Fig. 4 gilt: Sind bei abgestelltem Fahrzeug (Zündung "AUS") bzw. im normalem Fahrbetrieb (Generator G versorgt das Bordnetz) die beiden Bereiche 1 und 2 miteinander verbunden, so kommt es zu einem Stromfluss $I_{12}$. Der Energiespeicher E2 ist durch den Schalttransistor T2 vom Bordnetz getrennt: $I_{E2} = 0$. Der Schalttransistor T2 ist nicht angesteuert. Ein Stromfluss durch seine Bodydiode nicht möglich, da die Spannung $U_{E2}$ kleiner oder maximal gleich der Spannung $U_2$ ist. Das Bordnetz, Strom $I_{BN}$, wird also entweder aus dem Energiespeicher E1 oder durch den Generator G versorgt. Erfolgt die Versorgung durch den Generator G (Spannung $U_1$ gleich der Batterie-Ladespannung, ca. 14,5 V, und größer als die Zellspannung von ca. 12,5 V des Energiespeichers E1), so kann durch Einschalten des Schalttransistor T2 (im Normalbetrieb) der Energiespeichers E2 geladen werden, Strom $I_{E2} < 0$.

Für die dritte Ausführungsform nach Fig. 5 gilt: Sind bei abgestelltem Fahrzeug (Zündung "AUS") bzw. im normalem Fahrbetrieb (Generator G versorgt das Bordnetz) die beiden Bereiche 1 und 2 miteinander verbunden, so kommt es zu einem Stromfluss $I_{12}$. Bei Zündung AUS, $U_1$ ca. 12,5 V, ist der Energiespeicher E2 vom Bordnetz getrennt: $I_{E2} = 0$. Der Schalttransistor T2 ist gesperrt. Ein Stromfluss durch seine Bodydiode nicht möglich, da die Spannung $U_{E2}$ etwa gleich der Spannung $U_1$ ist. Bei normalem Fahrbetrieb (Generator G ist aktiv), $U_1$ ca. 14,5 V, ist der Energiespeicher E2 über die Bodydiode von T2 und/oder den invers leitend geschalteten Transistor T2 mit dem Bordnetz verbunden und wird geladen.

Um den Spannungsabfall über dem Transistor T1 bzw. dessen Bodydiode gering zu halten, wird der Transistor T1 invers durchgeschaltet. Dies ist aufgrund des symmetrischen Aufbaues eines MOSFETs zulässig. Kommt es nun zu einem Spannungseinbruch im Bereich 1, so soll zum einen ein Absinken der Spannung $U_2$ unter die Spannung $U_{E2}$ des Energiespeichers E2 verhindert werden und zum anderen ein Stromfluss von Bereich 2 nach Bereich 1, Strom $I_{12} < 0$, unterbunden werden.

Hierzu werden in einer Steuer- und Überwachungsschaltung 420 im Trennschalter 400 die Spannungen $U_1$ und $U_{E2}$ und/oder der Strom $I_{12}$ überwacht. Wird ein Absinken der Spannung $U_1$ unter den Wert der Spannung $U_{E2}$ erkannt, also $U_1 < U_{E2}$, und/oder ein Absinken des Stromes $I_{12}$ von einem Wert $I_{12} > 0$ auf 0 (mit einer dann folgenden Stromumkehr: $I_{12} < 0$), wird der Schalttransistor T1 gesperrt. Gleichzeitig wird der Schalttransistor T2 - gemäß der zweiten Ausführungsform aus Fig. 4 inversleitend (Stromfluß von S nach D) und gemäß der dritten Ausführungsform aus Fig. 5 normalleitend (Stromfluß von D nach S) - durchgeschaltet, so dass nun das Bordnetz aus dem Energiespeicher E2 versorgt wird: $I_{BN} = I_{E2}$. wird der Schalttransistor T1 gesperrt. Gleichzeitig wird der Schalttransistor T2 invers durchgeschaltet, so dass nun das Bordnetz aus dem Energiespeicher E2 versorgt wird: $I_{BN} = I_{E2}$.

Auf diese Weise kann die Versorgung des Bordnetzes unterbrechungsfrei vom Generator G oder des Energiespeichers E1 des ersten Bereichs des Bordnetzes auf den Energiespeicher E2 umgestellt werden, ohne das eine Beeinträchtigung in der Stromversorgung auftritt. Auch wenn vorzugsweise die Spannung des Energiespeichers E2 als Umschaltkriterium verwendet wird, so ist alternativ ebenso der in Zusammenhang mit der ersten Ausführungsform (vgl. Fig. 2) beschriebne Schwellwert als Umschaltkriterium einsetzbar, so dass eine separate Überwachung von $U_{E2}$ nicht erforderlich ist.

Im gesperrten Zustand des Schalttransistors T1 ist ein Stromfluss durch die Bodydiode von T1 nicht mehr möglich, da die Spannung $U_1$ nicht mehr um die Durchlaßspannung $U_D$ über der Spannung $U_{E2}$ bzw. der Spannung $U_2$ des Bereiches 2 liegt. Steigt die Spannung $U_1$ wieder an, wird der Schalttransistor T1 wieder (invers) durchgeschaltet, wenn für $U_1$ gilt:

$$U_2 \; < \; U_1 \; < \; ( \, U_2 \; + \; U_D \, )$$

Gleichzeitig wird Schalttransistor T2 wieder gesperrt: $I_{E2} = 0$, $I_{12} = I_{BN}$.

Gemäß der ersten Ausführungsform ist der Energiespeicher E2 direkt mit dem Bordnetz verbunden. Die an E2 anliegende Spannung ist somit immer gleich der Spannung $U_2$ im zweiten Bereich des Bordnetzes. Erreicht $U_2$ den Wert der Ladespannung (also etwa 14,4 V bei einer 12V-Batterie), so wird E2 geladen.

In der zweiten und dritten Ausführungsform der Erfindung ist der Energiespeicher E2 dagegen nicht permanent mit dem Bordnetz verbunden, sondern nur über den Schalttransistor T2. Da die Überwachungsschaltung 420 den zweiten Schalttransistor T2 jedoch nur dann durchschaltet, wenn T1 aufgrund eines Spannungsabfalls im ersten Bereich des Bordnetzes sperrt, wird der Energiespeicher E2 nicht automatisch über das Bordnetz geladen.

Zur Ladung des Energiespeichers E2 wird mit Hilfe der Strommesseinrichtung Im2 die Stromaufnahme und -abgabe des Energiespeichers E2 kontinuierlich überwacht. Wenn erforderlich, wird bei eingeschaltetem Transistor T1 auch der Transistor T2 eingeschaltet, um den Energiespeicher E2 direkt mit dem Bordnetz, insbesondere mit dem Generator G zu verbinden. Auf diese Weise kann dem Energiespeicher E2 wieder die zuvor an das Bordnetz abgegebene Energie zugeführt werden.

Die vorliegende Erfindung bezieht sich also auf einen Trennschalter zur Trennung eines Kfz-Bordnetzes in zwei Bereiche, mit dem bei einer plötzlich auftretenden Belastungsspitze im ersten Bereich ein Spannungsabfall im zweiten Bereich verhindert werden kann. Erfindungsgemäß enthält der Trennschalter einen Halbleiterschalter und überwacht den Strom oder die Spannung über den Halbleiterschalter. Sobald eine Stromumkehr oder Spannungsunterschreitung, die zu einem Stromfluss aus dem zweiten Bereich in der ersten Bereich führt, detektiert wird, wird der Halbleiterschalter geöffnet, um so einen Spannungseinbruch im zweiten Bereich zu verhindern. Somit wird ein autonom schaltender Trennschalter zur Verfügung gestellt, der auch auf spontan auftretende Belastungsspitzen reagieren kann.

**Patentansprüche**

1. Trennschalter zur Trennung eines Kfz-Bordnetzes in zwei Bereiche, mit

   einem ersten Eingangsanschluss (101) und einem Ausgangsanschluss (102),

   einem ersten Halbleiterschalter (110), der den ersten Eingangsanschluss (101) mit dem Ausgangsanschluss (102) verbindet,

   einer Überwachungsschaltung (120; 420), die zumindest die Spannung am ersten Eingangsanschluss und/oder am Ausgangsanschluss (101;102) oder den Strom durch den ersten Halbleiterschalter (110) überwacht, und

   einer Steuerschaltung (120; 420), die den ersten Halbleiterschalter (110) abschaltet, wenn die Überwachungsschaltung (120; 420) feststellt, dass die überwachte Spannung oder der überwachte Strom unter einen vorgegebenen Schwellwert absinkt, **gekennzeichnet durch**

   einen zweiten Eingangsanschluss (403) und einen zweiten Halbleiterschalter (415), der den zweiten Eingangsanschluss (403) mit dem Ausgangsanschluss (102) verbindet,

   wobei die Steuerschaltung (120; 420), so eingerichtet ist, dass sie den zweiten Halbleiterschalter (415) einschaltet, wenn die Überwachungsschaltung (120; 420) feststellt, dass die überwachte Spannung oder der überwachte Strom unter den vorgegebenen Schwellwert absinkt.

2. Trennschalter nach Anspruch 1, wobei die Überwachungsschaltung (120; 420) zumindest die Spannung am Eingangs- oder Ausgangsanschluss (101, 102) des ersten Halbleiterschalters (110) überwacht und die Steuerschaltung (120; 420) den ersten Halbleiterschalter (110) einschaltet, wenn die Überwachungsschaltung (120; 420) feststellt, dass die überwachte Spannung einen vorgegebenen Schwellwert überschreitet.

3. Trennschalter nach Anspruch 1 oder 2, wobei der vorgegebene Schwellwert kleiner als die Ladespannung für einen Energiespeicher (E1) im Bordnetz ist.

4. Trennschalter nach Anspruch 3, wobei der vorgegebene Schwellwert einem Spannungswert zwischen der Ladespannung und der Spannung im Entladungszustand eines Energiespeichers (E2) im Bordnetz entspricht.

5. Trennschalter nach Anspruch 4, wobei der vorgegebene Schwellwert in der Mitte oder beim unteren Drittel des Spannungsbereichs zwischen Lade- und Entladespannung liegt.

6. Trennschalter nach einem der Ansprüche 1 bis 5, wobei der vorgegebene Schwellwert für 12V-Bordnetze im Bereich zwischen 12,0 V und 14,4 V, für 24V-Bordnetze im Bereich zwischen 24,0 V und 28,8 V und für 40V-Bordnetze im Bereich zwischen 36,0 V und 43,2 V liegt.

7. Trennschalter nach einem der Ansprüche 1 bis 6, wobei der vorgegebene Schwellwert bei 13,2 V oder 12,8 V für 12V-Bordnetze V, bei 26,4 V oder 25,6 V für 24V-Bordnetze und bei 39,6 V oder 38,4 V für 40V-Bordnetze liegt.

8. Trennschalter nach einem der Ansprüche 1 bis 7, wobei die Steuerschaltung (120; 420) den ersten Halbleiterschalter (110) im eingeschalteten Zustand belässt, solange ein Strom vom ersten Eingangsanschluss (101) zum Ausgangsanschluss (102) des Trennschalters fließt, und den ersten Halbleiterschalter (110) abschaltet, sobald sich die Stromrichtung umkehrt.

9. Trennschalter nach Ansprüche 8, wobei die Steuerschaltung (120; 420) den ersten Halbleiterschalter (110) bei einer Umkehr der Stromrichtung im Augenblick des Nulldurchgangs des Stroms durch den Trennschalter abschaltet.

10. Trennschalter nach einem der Ansprüche 1 bis 9, wobei die Steuerschaltung (120; 420) den ersten Halbleiterschalter (110) im ausgeschalteten Zustand belässt, solange die Spannung (U1) am ersten Eingangsanschluss (101) des Trennschalters kleiner ist, als die Spannung (U2) am Ausgangsanschluss (102), und den ersten Halbleiterschalter (110) einschaltet, sobald die Spannung (U1) am Eingangsanschluss (101) gleich oder größer als die Spannung (U2) am Ausgangsanschluss (102) ist.

11. Trennschalter nach einem der Ansprüche 1 bis 10, wobei der erste Halbleiterschalter (110) einen invers betriebenen Feldeffekttransistor umfasst.

12. Trennschalter nach einem der Ansprüche 1 bis 11, wobei der erste Halbleiterschalter (110) eine Mehrzahl parallel geschalteter Feldeffekttransistoren (T1 - Tn) im Inversbetrieb umfasst.

13. Trennschalter nach Anspruch 12, wobei die Mehrzahl parallel geschalteter Feldeffekttransistoren (T1 - Tn) auf einer gemeinsamen Wärmesenke montiert sind.

14. Trennschalter nach einem der Ansprüche 11 bis 13, wobei der Source-Anschluss (S) des mindestens einen Feldeffekttransistors (T) mit dem ersten Eingangsanschluss (101) und der Drain-Anschluss (D) des mindestens einen Feldeffekttransistors (T) mit dem Ausgangsanschluss (102) verbunden ist.

**15.** Trennschalter nach einem der Ansprüche 1 bis 14, wobei die Überwachungsschaltung (120; 420) außerdem die Temperatur (J1) des ersten Halbleiterschalters (110) überwacht und die Steuerschaltung (120; 420) den ersten Halbleiterschalter (110) einschaltet, wenn die Überwachungsschaltung (120; 420) feststellt, dass die Temperatur (J1) eine vorgegebene Grenze überschreitet.

**16.** Trennschalter nach einem der Ansprüche 1 bis 15, wobei der erste Eingangsanschluss (101) mit einem ersten Bereich des Kfz-Bordnetzes verbunden ist und der Ausgangsanschluss (102) mit einem zweiten Bereich des Kfz-Bordnetzes verbunden ist, der vom ersten Bereich mit Strom versorgt wird.

**17.** Trennschalter nach einem der Ansprüche 1 bis 16, wobei die Steuerschaltung (120; 420) so eingerichtet ist, dass sie den zweiten Halbleiterschalter (415) ausschaltet, wenn sie den ersten Halbleiterschalter (110) einschaltet.

**18.** Trennschalter nach einem der Anspruch 1 bis 17, wobei die Überwachungsschaltung (120; 420) so eingerichtet ist, dass sie die Spannung am ersten Eingangsanschluss (101) und die Spannung am zweiten Eingangsanschluss (403) überwacht, und die Steuerschaltung (120; 420), so eingerichtet ist, dass sie den ersten Halbleiterschalter (110) ausschaltet und den zweiten Halbleiterschalter (415) einschaltet, wenn die Überwachungsschaltung (120; 420) feststellt, dass die Spannung am ersten Eingangsanschluss (101) kleiner ist als die Spannung am zweiten Eingangsanschluss (403).

**19.** Trennschalter nach einem der Ansprüche 1 bis 18, wobei der zweite Halbleiterschalter (415) einen Feldeffekttransistor umfasst, dessen Source-Anschluss (S) mit dem zweiten Eingangsanschluss (403) und dessen Drain-Anschluss (D) mit dem Ausgangsanschluss (102) verbunden ist.

**20.** Trennschalter nach einem der Ansprüche 1 bis 18, wobei der zweite Halbleiterschalter (415) einen Feldeffekttransistor umfasst, dessen Drain-Anschluss (D) mit dem zweiten Eingangsanschluss (403) und dessen Source-Anschluss (S) mit dem Ausgangsanschluss (102) verbunden ist.

**21.** Bordnetz für ein Kraftfahrzeug mit einem ersten Bereich und einem davon trennbaren zweiten Bereich, wobei der erste Bereich einen Generator (G), einen ersten Energiespeicher (E1) und einen Starter (S) umfasst, der zweite Bereich mit einer Mehrzahl von Verbrauchern verbunden ist und einen zweiten Energiespeicher (E2) umfasst und der erste Bereich und der zweite Bereich des Bordnetzes über einen Trennschalter (100;400) nach einem der Ansprüche 1 bis 20 verbunden sind.

**Claims**

**1.** Circuit breaker for separating a motor vehicle electrical system into two regions, with a first input terminal (101) and an output terminal (102), a first semiconductor switch (110) that connects the first input terminal (101) with the output terminal (102), a monitoring circuit (120; 420) that monitors at least the voltage at the first input terminal and/or at the output terminal (101; 102) or the current through the first semiconductor switch (110), and a control circuit (120; 420) that deactivates the first semiconductor switch (110) when the monitoring circuit (120; 420) determines that the voltage or the current being monitored has dropped below a predetermined threshold value, **characterized by** a second input terminal (403) and a second semiconductor switch (415) that connects the second input terminal (403) with the output terminal (102), wherein the control circuit (120; 420) is configured such that it activates the second semiconductor switch (415) when the monitoring circuit (120; 420) determines that the voltage or the current being monitored has dropped below the predetermined threshold value.

**2.** Circuit breaker according to Claim 1, wherein the monitoring circuit (120; 420) monitors at least the voltage at the input or output terminal (101, 102) of the first semiconductor switch (110), and the control circuit (120; 420) activates the first semiconductor switch (110) when the monitoring circuit (120; 420) determines that the voltage being monitored exceeds a predetermined threshold value.

**3.** Circuit breaker according to Claim 1 or 2, wherein the predetermined threshold value is lower than the charging voltage for an energy storage device (E1) in the electrical system.

**4.** Circuit breaker according to Claim 3, wherein the predetermined threshold value corresponds to a voltage level between the charging voltage and the voltage in the discharge state of an energy storage device (E2) in the electrical system.

**5.** Circuit breaker according to Claim 4, wherein the predetermined threshold value falls in the middle or in the lower third of the voltage range between the charging and discharging voltage.

**6.** Circuit breaker according to one of Claims 1 to 5, wherein the predetermined threshold value lies in the range between 12.0 V and 14.4 V for 12V electrical systems, in the range between 24.0 V and 28.8 V for 24V electrical systems and in the range between 36.0 V and 43.2 V for 40V electrical systems.

**7.** Circuit breaker according to one of Claims 1 to 6, wherein the predetermined threshold value is 13.2 V or 12.8 V for 12V electrical systems, 26.4 V or 25.6 V for 24V electrical systems and 39.6 V or 38.4 for 40V electrical systems.

**8.** Circuit breaker according to one of Claims 1 to 7, wherein the control circuit (120; 420) leaves the first semiconductor switch (110) in the activated state as long as a current is flowing from the first input terminal (101) to the output terminal (102) of the circuit breaker, and deactivates the first semiconductor switch (110) as soon as the flow direction reverses.

**9.** Circuit breaker according to Claim 8, wherein the control circuit (120; 420) deactivates the first semiconductor switch (110) when the current direction reverses at the moment of the zero crossing of the current through the circuit breaker.

**10.** Circuit breaker according to one of Claims 1 to 9, wherein the control circuit (120; 420) leaves the first semiconductor switch (110) in the deactivated state as long as the voltage (U1) at the first input terminal (101) of the circuit breaker is lower than the voltage (U2) at the output terminal (102), and it activates the first semiconductor switch (110) as soon as the voltage (U1) at the input terminal (101) is greater than or equal to the voltage (U2) at the output terminal (102).

**11.** Circuit breaker according to one of Claims 1 to 10, wherein the first semiconductor switch (110) has an inversely operated field effect transistor.

**12.** Circuit breaker according to one of Claims 1 to 11, wherein the first semiconductor switch (110) has a plurality of parallel-connected field effect transistors (T1 - Tn) in inverse operation.

**13.** Circuit breaker according to Claim 12, wherein the plurality of parallel-connected field effect transistors (T1 - Tn) is mounted on a common heat sink.

**14.** Circuit breaker according to one of Claims 11 to 13, wherein the source terminal (S) of the at least one field effect transistor (T) is connected with the first input terminal (101), and the drain terminal (D) of the at least one field effect transistor (T) is connected with the output terminal (102).

**15.** Circuit breaker according to one of Claims 1 to 14, wherein the monitoring circuit (120; 420) additionally monitors the temperature (J1) of the first semiconductor switch (110), and the control circuit (120; 420) activates the first semiconductor switch (110) when the monitoring circuit (120; 420) determines that the temperature (J1) exceeds a predetermined limit.

**16.** Circuit breaker according to one of Claims 1 to 15, wherein the first input terminal (101) is connected with a first region of the motor vehicle electrical system, and the output terminal (102) is connected with a second region of the motor vehicle electrical system, which is provided with current by the first region.

**17.** Circuit breaker according to one of Claims 1 to 16, wherein the control circuit (120; 420) is configured such that it deactivates the second semiconductor switch (415) when it activates the first semiconductor switch (110).

**18.** Circuit breaker according to one of Claims 1 to 17, wherein the monitoring circuit (120; 420) is configured such that it monitors the voltage at the first input terminal (101) and the voltage at the second input terminal (403), and the control circuit (120; 420) is configured such that it deactivates the first semiconductor switch (110) and activates the second semiconductor switch (415) when the monitoring circuit (120; 420) determines that the voltage at the first input terminal (101) is lower than the voltage at the second input terminal (403).

**19.** Circuit breaker according to one of Claims 1 to 18, wherein the second semiconductor switch (415) has a field effect transistor, the source terminal (S) of which is connected with the second input terminal (403) and the drain terminal (D) of which is connected with the output terminal (102).

**20.** Circuit breaker according to one of Claims 1 to 18, wherein the second semiconductor switch (415) has a field effect transistor, the drain terminal (D) of which is connected with the second input terminal (403) and the source terminal (S) of which is connected with the output terminal (102).

**21.** Electrical system for a motor vehicle, having a first region and a second region, which can be separated from the first region, wherein
the first region has a generator (G), a first energy storage device (E1) and a starter (S),
the second region is connected with a plurality of consumers and has a second energy storage device (E2), and
the first region and the second region of the electrical system are connected via a circuit breaker (100; 400) according to one of Claims 1 to 20.

**Revendications**

1. Sectionneur pour séparer un réseau de bord de véhicule automobile en deux zones, comprenant
   une première borne de raccordement d'entrée (101) et une borne de raccordement de sortie (102),
   un premier commutateur à semi-conducteur (110), qui relie la première borne de raccordement d'entrée (101) à la borne de raccordement de sortie (102),
   un circuit de surveillance (120; 420), qui assure la surveillance d'au moins la tension au niveau de la première borne de raccordement d'entrée et/ou de la borne de raccordement de sortie (101; 102), ou bien le courant passant à travers le premier commutateur à semi-conducteur (110), et
   un circuit de commande (120; 420), qui ouvre le premier commutateur à semi-conducteur (110) lorsque le circuit de surveillance (120; 420) constate que la tension surveillée ou le courant surveillé s'abaisse sous une valeur de seuil prédéterminée,
   **caractérisé par**
   une deuxième borne de raccordement d'entrée (403) et
   un deuxième commutateur à semi-conducteur (415), qui relie la deuxième borne de raccordement d'entrée (403) à la borne de raccordement de sortie (102),
   le circuit de commande (120; 420) étant configuré de manière à fermer le deuxième commutateur à semi-conducteur (415), lorsque le circuit de surveillance (120; 420) constate que la tension surveillée ou le courant surveillé s'abaisse sous la valeur de seuil prédéterminée.

2. Sectionneur selon la revendication 1, dans lequel le circuit de surveillance (120; 420) surveille au moins la tension au niveau de la borne de raccordement d'entrée ou de sortie (101, 102) du premier commutateur à semi-conducteur (110), et le circuit de commande (120; 420) ferme le premier commutateur à semi-conducteur (110), lorsque le circuit de surveillance (120; 420) constate que la tension surveillée dépasse une valeur de seuil prédéterminée.

3. Sectionneur selon la revendication 1 ou la revendication 2, dans lequel la valeur de seuil prédéterminée est inférieure à une tension de charge pour un accumulateur d'énergie (E1) dans le réseau de bord.

4. Sectionneur selon la revendication 3, dans lequel la valeur de seuil prédéterminée correspond à une valeur de tension entre la tension de charge et la tension dans l'état de décharge d'un accumulateur d'énergie (E2) dans le réseau de bord.

5. Sectionneur selon la revendication 4, dans lequel la valeur de seuil prédéterminée se situe au milieu ou au niveau du tiers inférieur de la plage de tension entre tension de charge et de décharge.

6. Sectionneur selon l'une des revendications 1 à 5, dans lequel la valeur de seuil prédéterminée se situe dans une plage entre 12,0 V et 14,4 V pour des réseaux de bord 12V, dans une plage entre 24,0 V et 28,8 V pour des réseaux de bord 24V, et dans une plage entre 36,0 V et 43,2 V pour des réseaux de bord 40V.

7. Sectionneur selon l'une des revendications 1 à 6, dans lequel la valeur de seuil prédéterminée se situe à 13,2 V ou 12,8 V pour des réseaux de bord 12V, à 26,4 V ou 25,6 V pour des réseaux de bord 24V, et à 39,6 V ou 38,4 V pour des réseaux de bord 40V.

8. Sectionneur selon l'une des revendications 1 à 7, dans lequel le circuit de commande (120; 420) laisse le premier commutateur à semi-conducteur (110) dans l'état fermé, aussi longtemps qu'un courant circule de la première borne de raccordement d'entrée (101) à la borne de raccordement de sortie (102) du sectionneur, et ouvre le premier commutateur à semi-conducteur (110) dès que le sens du courant s'inverse.

9. Sectionneur selon la revendication 8, dans lequel le circuit de commande (120; 420) produit l'ouverture du premier commutateur à semi-conducteur (110) lors d'une inversion du sens du courant, à l'instant même du passage par zéro du courant à travers le sectionneur.

10. Sectionneur selon l'une des revendications 1 à 9, dans lequel le circuit de commande (120; 420) laisse le premier commutateur à semi-conducteur (110) dans l'état fermé, aussi longtemps que la tension (U1) à la première borne de raccordement d'entrée (101) du sectionneur, est inférieure à la tension (U2) à la borne de raccordement de sortie (102), et ouvre le premier commutateur à semi-conducteur (110), dès que la tension (U1) à la première borne de raccordement d'entrée (101) est égale ou supérieure à la tension (U2) à la borne de raccordement de sortie (102).

11. Sectionneur selon l'une des revendications 1 à 10, dans lequel le premier commutateur à semi-conducteur (110) comprend un transistor à effet de champ en mode inverse.

12. Sectionneur selon l'une des revendications 1 à 11, dans lequel le premier commutateur à semi-conducteur (110) comprend une pluralité de transistors à effet de champ (T1 - Tn) montés en parallèle, en mode inverse.

13. Sectionneur selon la revendication 12, dans lequel la pluralité de transistors à effet de champ (T1 - Tn) montés en parallèle, sont placés sur un dissipateur de chaleur commun.

14. Sectionneur selon l'une des revendications 11 à 13, dans lequel la borne source (S) dudit au moins un transistor à effet de champ (T), est reliée à la première borne de raccordement d'entrée (101), et la borne drain (D) dudit au moins un transistor à effet de champ (T) est reliée à la borne de raccordement de sortie (102).

15. Sectionneur selon l'une des revendications 1 à 14, dans lequel le circuit de surveillance (120; 420) surveille, en outre, la température (J1) du premier commutateur à semi-conducteur (110), et le circuit de commande (120; 420) ferme le premier commutateur à semi-conducteur (110) lorsque le circuit de surveillance (120; 420) constate que la température (J1) dépasse une limite prédéterminée.

16. Sectionneur selon l'une des revendications 1 à 15, dans lequel la première borne de raccordement d'entrée (101) est reliée à une première zone du réseau de bord du véhicule automobile, et la borne de raccordement de sortie (102) est reliée à une deuxième zone du réseau de bord du véhicule automobile, qui est alimentée en courant par la première zone.

17. Sectionneur selon l'une des revendications 1 à 16, dans lequel le circuit de commande (120; 420) est configuré de manière à ouvrir le deuxième commutateur à semi-conducteur (415) lorsqu'il ferme le premier commutateur à semi-conducteur (110).

18. Sectionneur selon l'une des revendications 1 à 17, dans lequel le circuit de surveillance (120; 420) est configuré de manière à surveiller la tension au niveau de la première borne de raccordement d'entrée (101) et la tension au niveau de la deuxième borne de raccordement d'entrée (403), et le circuit de commande (120; 420) est configuré de manière à ouvrir le premier commutateur à semi-conducteur (110) et fermer le deuxième commutateur à semi-conducteur (415) lorsque le circuit de surveillance (120; 420) constate que la tension au niveau de la première borne de raccordement d'entrée (101) est inférieure à la tension au niveau de la deuxième borne de raccordement d'entrée (403).

19. Sectionneur selon l'une des revendications 1 à 18, dans lequel le deuxième commutateur à semi-conducteur (415) comprend un transistor à effet de champ dont la borne source (S) est reliée à la deuxième borne de raccordement d'entrée (403), et dont la borne drain (D) est reliée à la borne de raccordement de sortie (102) .

20. Sectionneur selon l'une des revendications 1 à 18, dans lequel le deuxième commutateur à semi-conducteur (415) comprend un transistor à effet de champ dont la borne drain (D) est reliée à la deuxième borne de raccordement d'entrée (403), et dont la borne source (S) est reliée à la borne de raccordement de sortie (102) .

21. Réseau de bord pour un véhicule automobile comportant une première zone et une deuxième zone pouvant en être séparée, réseau de bord dans lequel la première zone comprend un générateur (G), un premier accumulateur d'énergie (E1) et un démarreur (S),
la deuxième zone est reliée à une pluralité de récepteurs-consommateurs et comprend un deuxième accumulateur d'énergie (E2), et
la première zone et la deuxième zone du réseau de bord sont reliées par l'intermédiaire d'un sectionneur (100; 400) selon l'une des revendications 1 à 20.

# Fig. 1

Bereich 1 | Bereich 2

$I_{12}$    Si    $I_{BN}$

$I_S$   $I_G$   $I_{EPS}$   $I_{E1}$   $U_1$   B   $U_2$   $I_{E2}$   Bordnetz

S   G   EPS   E 1   Trenn-schalter   E 2

A.S

# Fig. 2

EP 2 017 935 B1

Fig. 3

Fig. 4

Fig. 5

Bereich 1

Bereich 2

Bordnetz

Schalttransistor **T2**

Schalttransistor **T1**

Steuer- und Über-wachungsschaltung

Trennschalter 2-fach

$I_S$

$I_G$

$I_{EPS}$

$I_{E1}$

$I_{12}$

$I_{BN}$

$I_{E2}$

$U_1$

$U_2$

$U_{E2}$

$U_{SD}$ bzw. $U_D$

S

G

EPS

E 1

E 2

Im1

Im2

Si

101

102

110

130

415

435

403

420

400

$9_1$

AS

S

D

G

S

D

G

# Fig. 6

EP 2 017 935 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19628222 A
- DE 19855245 A